# EUROPEAN PATENT APPLICATION

(11) **EP 4 455 561 A1**
(43) Date of publication of application: **30.10.2024**
(21) Application number: 21899280.8
(22) Date of filing: 31.12.2021
(51) Int. Cl.: F24F 3/14, F24H 4/02, F25B 29/00

(54) **SWIMMING POOL TEMPERATURE ADJUSTING APPARATUS**

(30) Priority: 21.12.2021 CN 202111572967
(71) Applicant: Guangdong TCL Intelligent Heating & Ventilating equipment Co., Ltd., Zhongshan, Guangdong 528427 (CN)
(72) Inventor: GAO, Yonghai, Zhongshan Guangdong 528427 (CN); CHEN, Hongfeng, Zhongshan Guangdong 528427 (CN); YANG, Rui, Zhongshan Guangdong 528427 (CN); DAI, Wenjie, Zhongshan Guangdong 528427 (CN)
(74) Representative: Murgitroyd & Company
(86) International application number: PCT/CN2021/144031
(87) International publication number: WO 2023/115643

(57) **Abstract**

A swimming pool temperature adjustment equipment includes a container with a water inlet port and a water output port, a water circuit system being arranged in the container and having a water inlet end and a water output end, a dehumidifying and temperature adjustment device being arranged in the container, and a disinfection device being communicated with the water circuit system. The water inlet end is communicated with the water inlet port. The water output end is communicated with the water output port. The dehumidifying and temperature adjustment device is used to adjust the temperature of the water flow in the water circuit system and dehumidify air. The disinfection device is used to disinfect the water flow of the water circuit system. The swimming pool temperature adjustment equipment is fully functional and easy to carry and install.

## Description

### BACKGROUND OF DISCLOSURE

### 1. Field of disclosure

The present disclosure relates to the technical field of swimming pool water adjustment equipment, and in particular to a swimming pool temperature adjustment equipment.

### 2. Description of Prior Art

As a leisure sport, swimming is loved by more and more people. Therefore, in order to swim at any time, family swimming pools have gradually become one of necessary living facilities for people. And people pay special attention to life science sports and entertainment. Therefore, demand for constant temperature of swimming pool water in all seasons and constant humidity of surrounding environment of swimming pool is constantly increasing. And there are also certain requirements for maintenance of water quality in the swimming pools.

At present, air source heat pumps are generally used in swimming pools to heat the pool water, which has a single function. When the air needs to be dehumidified, an indoor dehumidifier needs to be added to dehumidify moisture in the air. When the swimming pool water needs to be sterilized and disinfected, it is necessary to add chlorine water to sterilize the pool water. In this scheme, equipment components used in treatment of swimming pools are independent products with a single function. When needed, they need to be purchased in the market and installed separately according to needs.

### BRIEF SUMMARY OF DISCLOSURE

The main purpose of the present application is to provide a swimming pool temperature adjustment equipment to solve a problem of single function of existing swimming pool temperature adjustment equipment.

The present application provides a swimming pool temperature adjustment equipment. The swimming pool temperature adjustment equipment comprises:
a container with a water inlet port and a water output port;
a water circuit system being arranged in the container and having a water inlet end and a water output end, the water inlet end is communicated with the water inlet port, and the water output end is communicated with the water output port;
a dehumidifying and temperature adjustment device being arranged in the container, the water flow in the water circuit system flows through the dehumidifying and temperature adjustment device, the dehumidifying and temperature adjustment device is used to adjust the temperature of the water flow in the water circuit system, and the dehumidifying and temperature adjustment device is also used to dehumidify the air; and
a disinfection device being communicated with the water circuit system, and the disinfection device is used to disinfect the water flow of the water circuit system.

The swimming pool temperature adjustment equipment proposed in this application can dehumidify the air by setting the dehumidifying and temperature adjustment device, so that it can reduce the humidity of the surrounding environment, improve the comfort of the surrounding environment. In other words, the water flow in the swimming pool flows from the water inlet end of the water circuit system to the water circuit system, and then the dehumidifying and temperature adjustment device. The dehumidifying and temperature adjustment device can exchange heat with the water flow in the water circuit system to realize the temperature adjustment of the water flow.

The water flow being adjusted temperature can flow from the water output end of the water circuit system to the swimming pool so that the water in the swimming pool can be adjusted temperature. The swimming pool temperature adjustment equipment further includes a disinfection device being communicated with the water circuit system. The water flow in the water circuit system can be disinfected by the disinfection device. The water circuit system, dehumidifying and temperature adjustment device and disinfection device are integrated at the container, that is, the swimming pool temperature adjustment device has the functions of dehumidifying the air, adjusting the temperature of the swimming pool water and disinfecting the swimming pool water at the same time. One device can meet various functional requirements, and the integration of the water circuit system, dehumidifying and temperature adjustment device and disinfection device at the container can also improve the convenience of swimming pool temperature adjustment equipment. When you need to use it, you only need to take the whole machine, which is convenient for transportation and installation.

### BRIEF DESCRIPTION OF DRAWINGS

FIG. 1 is a schematic structural view of swimming pool temperature adjustment equipment of the present application.
FIG. 2 is a schematic structural view of the swimming pool temperature adjustment equipment shown in FIG. 1 from another perspective.
FIG. 3 is a first schematic structural view of the swimming pool temperature adjustment equipment shown in FIG. 1 when a cover is not installed.
FIG. 4 is a schematic structural view of the swimming pool temperature adjustment equipment shown in FIG. 3 from another perspective.
FIG. 5 is a first schematic view of the swimming pool temperature adjustment equipment of the present application.
FIG. 6 is a second schematic view of the swimming pool temperature adjustment equipment of the present application.
FIG. 7 is a second schematic structural view of the swimming pool temperature adjustment equipment shown in FIG. 1 when the cover is not installed.

### DETAILED DESCRIPTION OF PREFERRED EMBODIMENTS

The present application provides a swimming pool temperature adjustment equipment. The technical solutions in the embodiments of the present application will be clearly and completely described below with reference to the accompanying drawings in the embodiments of the present application. Obviously, the described embodiments are only a part of the embodiments of the present application, but not all of the embodiments. Based on the embodiments in this application, all other embodiments obtained by those skilled in the art without creative efforts shall fall within the protection scope of this application.

The embodiment of the present application provides a swimming pool temperature adjustment device to solve the problem of single function of the existing swimming pool temperature adjustment device. This will be described below with reference to the accompanying drawings.

The swimming pool temperature adjustment equipment provided in the embodiments of the present application can be applied to swimming pools. The swimming pool temperature adjustment equipment is used to deal with swimming pool water and dehumidify surrounding environment to make the swimming pool more suitable for swimmers to swim.

It should be noted that with the increasing needs of entertainment, people have certain requirements for temperature and quality of the swimming pool water and humidity of the surrounding environment of the swimming pool. For example, in swimming pools, air source heat pumps are generally used to heat the pool water. And an indoor dehumidifying device is added to dehumidify moisture in the air. When the swimming pool water needs to be disinfected, it is necessary to add chlorine water to disinfect the pool water. The equipment components for handling of swimming pool water in this scheme are independent products. When they are needed, they need to be purchased separately in the market according to needs, and then delivered to the site for assembling and integration, which increases not only the procurement workload and the cargo transportation cycle, but also the installation workload and maintenance difficulty. So the existing equipment components are found not convenient to install and use.

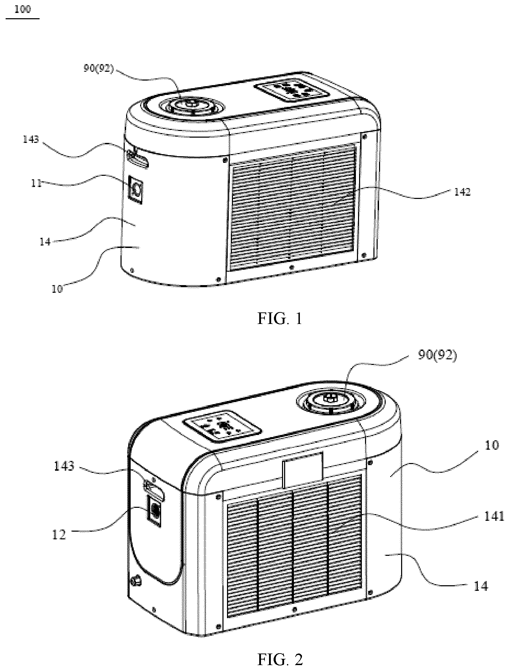

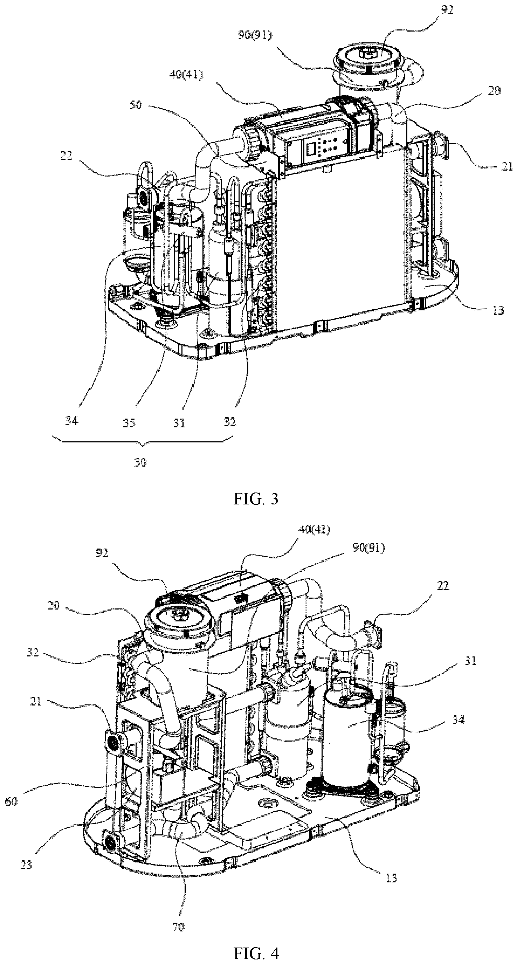

Based on this, please refer to FIGs. 1-3, FIG. 1 is a schematic structural view of a swimming pool temperature adjustment equipment of the present application. FIG. 2 is a schematic structural view of the swimming pool temperature adjustment equipment shown in FIG. 1 from another perspective. FIG. 3 is a first schematic structural view of the swimming pool temperature adjustment equipment shown in FIG. 1 when a cover is not installed. The embodiment of the present application provides a swimming pool temperature adjustment device 100 including a container 10, a water circuit system 20, a dehumidifying and temperature adjustment device 30 and a disinfection device 40. The container 10 includes a water inlet port 11 and a water output port 12. The water circuit system 20 is arranged in the container 10. The water circuit system 20 includes a water inlet end 21 and a water output end 22. The water inlet end 21 of the water circuit system 20 is communicated with the water inlet port 11. The water output end 22 of the water circuit system 20 is communicated with the water output port 12. Water in the swimming pool can be introduced from the water inlet end 21 of the water circuit system 20 and flow back into the swimming pool from the water output end 22 of the water circuit system 20 after circulating in the water circuit system 20. For example, water pipes can be externally communicated to the water inlet port 11 and the water output port 12 of the container 10. Concretely, the water pipes comprise a water inlet pipe and a water output pipe. One end of the water inlet pipe extends into the swimming pool, and another end of the water inlet pipe is communicated with the water inlet end 21 of the water circuit system 20 by a first quick connecting port. One end of the water output pipe is communicated with the water output end 22 of the water circuit system 20 by a second quick connecting port, and another end of the water output pipe extends into the swimming pool. The water circuit system 20 can pump the water in the swimming pool into the water circuit system 20 from the water inlet pipe and circulate back into the swimming pool from the water output pipe, so that the water in the swimming pool can circulate among the swimming pool, the water circuit system 20 and the swimming pool.

The dehumidifying and temperature adjustment device 30 is arranged in the container 10. The water flow in the water circuit system 20 flows through the dehumidifying and temperature adjustment device 30. The dehumidifying and temperature adjustment device 30 can be used to dehumidify the air, thereby reducing the humidity of the surrounding environment and improving the comfort of the surrounding environment. When the water flow in the water circuit system 20 flows through the dehumidifying and temperature adjustment device 30, the dehumidifying and temperature adjustment device 30 can be used to adjust a temperature of the water flow in the water circuit system 20, so that a water temperature in the swimming pool can be more suitable for humans.

The disinfection device 40 is in communication with the water circuit system 20, and the disinfection device 40 is used for disinfecting the water flow in the water circuit system 20 so as to improve water quality of the swimming pool. It can be understood that the swimming pool temperature adjustment device 100 provided in the embodiment of the present application has various functions to meet various needs of people. The dehumidifying and temperature adjustment device 30 can be used to dehumidify the air, thereby reducing the humidity of the surrounding environment and improving the comfort of the surrounding environment. The water flow in the water circuit system 20 flows through the dehumidifying and temperature adjustment device 30. The water in the swimming pool flows from the water inlet end 21 of the water circuit system 20 to the water circuit system 20, and then the dehumidifying and temperature adjustment device 30. The dehumidifying and temperature adjustment device 30 can exchange heat with the water flow in the water circuit system 20 to realize the temperature adjustment of the water. The water being adjusted temperature can flow from the water output end 22 of the water circuit system 20 to the swimming pool so that a temperature of the water in the swimming pool can be adjusted. The swimming pool temperature adjustment equipment 100 further includes a disinfection device 40 being communicated with the water circuit system 20. The water flow in the water circuit system 20 can be disinfected by the disinfection device 40 so that the water quality can be improved. The water circuit system 20, dehumidifying and temperature adjustment device 30, and disinfection device 40 are integrated at the container 10, that is, the swimming pool temperature adjustment device 100 has functions of dehumidifying the air, adjusting the temperature of the swimming pool water, and disinfecting the swimming pool water at a same time. One device can meet various functional requirements, and the integration of the water circuit system 20, dehumidifying and temperature adjustment device 30, and disinfection device 40 at the container 10 can also improve the convenience of use of swimming pool temperature adjustment equipment 100. When you need to use it, you only need to take the whole machine, which is convenient for carrying and installation.

It can be understood that the disinfection device 40 can be installed outside the container 10 or inside the container 10. When the disinfection device 40 is installed outside the container 10, it can facilitate the operation of the disinfection device 40, such as maintenance or adding disinfectant. When the disinfection device 40 is installed in the container 10, it can be protected by the container 10 and is not easily damaged.

In some embodiments, please refer to FIG. 4 in conjunction with FIG. 1 to FIG. 3. FIG. 4 is a schematic structural view of the swimming pool temperature adjustment equipment shown in FIG. 3 from another perspective. The container 10 includes a base portion 13 and a cover 14. The water circuit system 20, the dehumidifying and temperature adjustment device 30, and the disinfection device 40 can be supported on the base portion 13. The cover 14 is arranged on the base portion 13 and encloses the water circuit system 20, the dehumidifying and temperature adjustment device 30, and the disinfection device 40. The cover 14 includes the water inlet port 11 and the water output port 12. Of course, it can also be that the dehumidifying and temperature adjustment device 30 is directly supported on the base portion 13. The disinfection device 40 is installed on a wall of the cover 14 by a first mounting bracket 50. The water circuit system 20 is supported on the base portion 13 by a second mounting bracket 60.

As shown in FIG. 1 and FIG. 2, in order to facilitate transportation of the swimming pool temperature adjustment device 100, a handle 143 may be provided on the container 10, for instance, the handle 143 may be provided on an outside wall of the cover 14, so as to facilitate the transportation of the swimming pool temperature adjustment device 100.

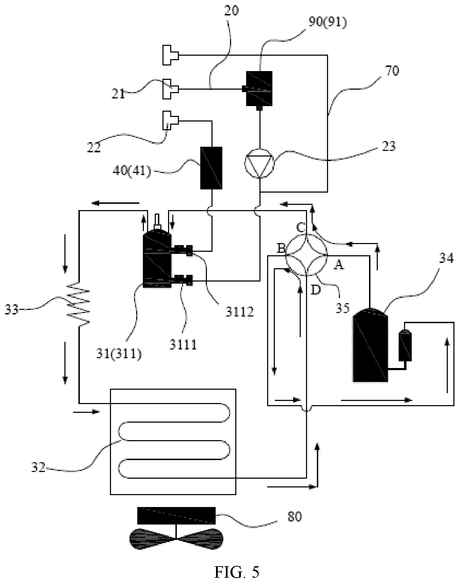

The dehumidifying and temperature adjustment device 30 in the embodiment of the present application is used as a device that can dehumidify the air and adjust the temperature of the water flow in the water circuit system 20. In some embodiments, please refer to FIG. 4 and FIG. 5 in conjunction with FIG. 3. FIG. 5 is a first schematic view of the swimming pool temperature adjustment equipment of the present application. The dehumidifying and temperature adjustment device 30 includes a first heat exchanger 31, a second heat exchanger 32, a throttling component 33, a refrigerant, and a compressor 34. The compressor 34, the first heat exchanger 31, the throttling component 33, and the second heat exchanger 32 are communicated in sequence. The second heat exchanger 32 is further communicated to the compressor 34 so that the compressor 34, the first heat exchanger 31, the throttling component 33, and the second heat exchanger 32 form a refrigerant circulation loop. The refrigerant can circulate and flow in the refrigerant circulation loop. The water flow in the water circuit system 20 flows through the first heat exchanger 31. The first heat exchanger 31 is used for exchanging heat for the water flow in the water circuit system 20. The second heat exchanger 32 is used for exchanging heat for the air to dehumidify the air. The throttling component 33 may include an expansion valve playing a role of throttling. The compressor 34 can be a variable frequency compressor, so that the efficiency of the compressor 34 can be adjusted according to needs, so as to achieve the purpose of saving energy and electricity.

It can be understood that the refrigerant is compressed and transformed into high-temperature and high-pressure gas by the compressor 34. The gas enters the first heat exchanger 31 (the first heat exchanger 31 at this time can be understood as a condenser) and exchanges heat with the water flow in the water circuit system 20 at the first heat exchanger 31. At this time, the first heat exchanger 31 exchanges heat to the water flow in the water circuit system 20 to increase the temperature of the water. The refrigerant after cold absorption and heat release becomes liquid of medium temperature and high pressure, and after flowing through the throttling component 33, the refrigerant becomes liquid of low temperature and low pressure. The liquid enters the second heat exchanger 32 (the second heat exchanger 32 at this time can be understood as evaporator) and exchange heat with the air at the second heat exchanger 32 which is in order to lower the temperature and dehumidify the surrounding environment. It is understandable that the moisture in the surrounding air condenses and releases heat when it encounters the second heat exchanger 32, and then reaches a dew point temperature, and becomes condensed water, which can flow to the chassis on the base portion 13 for collection and flowing away. The refrigerant flowing through the second heat exchanger 32 becomes a low-temperature and low-pressure gas after endothermic and exothermic reactions, and returns to the compressor 34 again, and then the above-mentioned cycle process can be continued. Therefore, in the process of circulating the refrigerant in the refrigerant circulation loop, the first heat exchanger 31 can be used to heat up the temperature of the water flow in the water circuit system 20, and the second heat exchanger 32 can be used to exchange heat for the air to dehumidify the air.

Exemplarily, please continue to refer to FIG. 4 and FIG. 5, the first heat exchanger 31 may include a housing case 311 and a first refrigerant pipe. The first refrigerant pipe is arranged in the housing case 311. And one end of the first refrigerant pipe is communicated to the compressor 34, another end of the first refrigerant pipe is communicated with the throttling component 33. The refrigerant can flow in the first refrigerant pipe. The water circuit system 20 is communicated with the housing case 311 so that the water can exchange heat with the first refrigerant pipe in the housing case 311. For example, as shown in FIG. 5, the housing case 311 is provided with a water-inlet end of housing case 3111 and a water-output end of housing case 3112. The water circuit system 20 is communicated with the water-inlet end of housing case 3111 and the water-output end of housing case 3112, so that the water flow in the water circuit system 20 could enter into the housing case 311 from the water-inlet end of housing case 3111 and exchange heat with the refrigerant in the first refrigerant pipe. The water after exchanging heat could flow out from the water-output end of housing case 3112 and then flow into the swimming pool by the water output end 22 of the water circuit system 20. It can be understood that the first heat exchanger 31 can be a titanium tube heat exchanger.

In some embodiments, please refer to FIG. 4 and FIG. 5, the swimming pool temperature adjustment device 100 further includes a sewage pipe 70 being communicated with the housing case 311. So that when sewage accumulates in the housing case 311, the sewage in the housing case 311 can be discharged through the sewage pipe 70.

Exemplarily, the sewage pipe 70 is communicated to one end of the housing case 311 close to a bottom wall of the housing case 311, so as to better drain the sewage.

In some embodiments, the second heat exchanger 32 includes a second refrigerant pipe. One end of the second refrigerant pipe is communicated with the throttling component 33, and another end of the second refrigerant pipe is communicated with the compressor 34. The refrigerant can pass through the second refrigerant pipe, so that the second heat exchanger 32 can exchange heat with the surrounding air.

Then, in order to improve the efficiency of heat exchange, the second heat exchanger 32 may also include a thermal transfer sheet, which is arranged on the second refrigerant pipe. The thermal transfer sheet can be in contact with a larger area of the air, so as to make a better effect of heat conducting. Under the heat-conducting effect of the thermal sheet, the second refrigerant pipe and the thermal transfer sheet can exchange heat for the air together to dehumidify the air. The second heat exchanger 32 can be a fin heat exchanger.

In some embodiments, please continue to refer to FIG. 3 and FIG. 5, the dehumidifying and temperature adjustment device 30 may further include a four-way valve 35. The four-way valve 35 includes a first port A, a second port B, a third port C, and a fourth port D. A first end of the compressor 34 is communicated with the first port A. A second end of the compressor 34 is communicated with the second port B. A first end of the first heat exchanger 31 is communicated with the third port C. A second end of the first heat exchanger 31 is communicated with a first end of the throttling component 33. A second end of the throttling component 33 is communicated with a first end of the second heat exchanger 32, and a second end of the second heat exchanger 32 is communicated with the fourth port D. By setting the four-way valve 35, a flow direction of the refrigerant in the refrigerant circulation loop can be changed according to the actual situation, so that the first heat exchanger 31 can refrigerate or heat the water flow in the water circuit system. And then low-temperature swimming pool water or high-temperature swimming pool water can be obtained as needed. it is understandable that low temperature and high temperature are relative terms. When the weather temperature is high, water that is suitable for human body temperature can be called low-temperature water, and when the weather temperature is low, water that is suitable for human body temperature can be called high-temperature water.

Exemplarily, in the heating mode, as shown in FIG. 5, the direction of the arrow in FIG. 5 indicates a direction of the circulating flow of the refrigerant. The four-way valve 35 may be in a condition that the first port A and the third port C are communicated with each other, and the fourth port D and the second port B are communicated with each other. At this time, the refrigerant can flow from the first end of the compressor 34 to the first port A, the third port C, the first heat exchanger 31, the throttling component 33, the second heat exchanger 32, the fourth port D, the second port B, and the second end of the compressor 34 in sequence. At this time, the refrigerant is compressed and transformed into high-temperature and high-pressure gas by the compressor 34. The gas enters through the first port A of the four-way valve 35, and flows from the third port C of the four-way valve 35 to the first heat exchanger 31 (the first heat exchanger 31 at this time can be understood as a condenser). Specifically, the refrigerant flows from the third port C of the four-way valve 35 to the first refrigerant pipe of the first heat exchanger 31, and exchange heat with the water flow in the water circuit system 20 in the first heat exchanger 31. At this time, the first heat exchanger 31 exchanges heat to the water flow in the water circuit system 20 to increase the temperature of the water. The refrigerant after endothermic and exothermic reactions turns into the medium-temperature and high-pressure liquid. The refrigerant flows through the throttling component 33 and turns into the low-temperature and low-pressure liquid. The liquid enters into the second heat exchanger 32 (specifically, it can be in the second refrigerant pipe of the second heat exchanger 32, and the second heat exchanger 32 at this time can be understood as an evaporator). The liquid exchanges heat with the air in the second heat exchanger 32 for cooling and dehumidifying the surrounding environment. It can be understood that the moisture in the surrounding air condenses and releases heat when it encounters the second heat exchanger 32, and then reaches the dew point temperature, and becomes condensed water. The condensed water can flow to the chassis on the base portion 13 for collection and flowing away. The refrigerant flowing through the second heat exchanger 32 becomes the low-temperature and low-pressure gas after absorbing heat and releasing cooling. And the gas flows into the fourth port D of the four-way valve 35 and flows from the second port B of the four-way valve 35 into the second end of the compressor 34, so that the refrigerant is returned to the compressor 34 again, and then the above-mentioned cycle can be continued. Therefore, in the heating mode, when the refrigerant circulates in the refrigerant circulation loop, the first heat exchanger 31 can be used to heat up the water flow in the water circuit system 20, and the second heat exchanger 32 can be used to exchange heat for air to dehumidify the air.

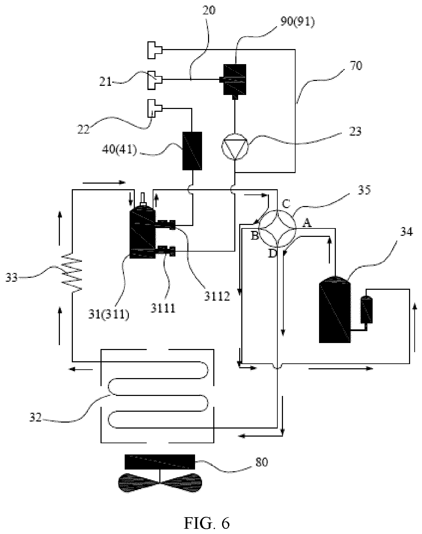

Alternatively, in the cooling mode, as shown in FIG. 6, FIG. 6 is a second schematic view of the swimming pool temperature adjustment equipment of the present application. The direction of the arrow in FIG. 6 indicates the direction of the circulating flow of the refrigerant. The four-way valve 35 can be in a state where the first port A and the fourth port D are in communication, and the third port C and the second port B are in communication. At this time, the refrigerant can flow from the first end of the compressor 34 to the first port A, the fourth port D, the second heat exchanger 32, the throttling component 33, the first heat exchanger 31, the third port C, the second port B, and the second end of the compressor 34. At this time, the refrigerant is compressed and transformed into the high-temperature and high-pressure gas by the compressor 34, and the gas enters through the first port A of the four-way valve 35, and flows from the fourth port D of the four-way valve 35 to the second heat exchanger 32 (The second heat exchanger 32 at this time can be understood as a condenser). Specifically, the refrigerant flows from the fourth port D of the four-way valve 35 to the second refrigerant pipe of the second heat exchanger 32. The refrigerant exchanges heat with the air in the second heat exchanger 32. Specifically releasing heat into the air, the refrigerant after the heat release becomes the medium-temperature and high-pressure liquid. The refrigerant becomes the low-temperature and lower-pressure liquid after flowing through the throttling component 33. The liquid enters into the first heat exchanger 31 (specifically, it can be into the first refrigerant pipe of the first heat exchanger 31, and the first heat exchanger 31 at this time can be understood as an evaporator). The refrigerant exchanges heat with the water flow in the water circuit system 20 in the first heat exchanger 31. At this time, the refrigerant of the first heat exchanger 31 absorbs the heat of the water flow in the water circuit system 20 to cool the water to obtain a low-temperature water. The refrigerant flowing through the first heat exchanger 31 becomes the low-temperature and lower-pressure gas after endothermic and exothermic reactions. The gas flows through the third port C of the four-way valve 35 and flows from the second port B to the second end of the compressor 34, so that the refrigerant is returned to the compressor 34 again, and then the above-mentioned cycle can be continued. Therefore, in the cooling mode, when the refrigerant circulates in the refrigerant circulation loop, the first heat exchanger 31 can be used to lower the temperature of the water flow in the water circuit system 20.

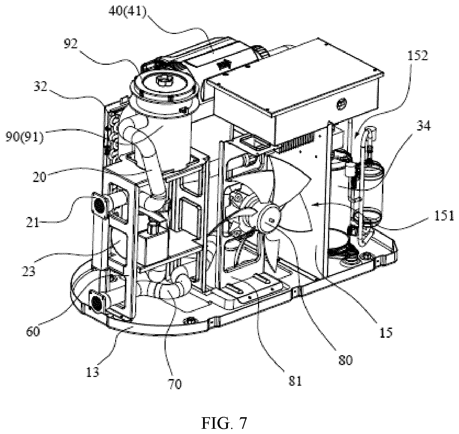

In some embodiments, the second heat exchanger 32 is used as a dehumidifying component. In order to better ensure the circulation of airflow around the second heat exchanger 32, please refer to FIG. 7. FIG. 7 is a second schematic structural view of the swimming pool temperature adjustment equipment shown in FIG. 1 when the cover is not installed. The swimming pool temperature adjustment device 100 may further include a fan 80. The fan 80 is arranged in the container 10 and is located on one side of the second heat exchanger 32. And the fan 80 can blow the air dehumidified by the second heat exchanger 32 to an outside of the container 10.

Exemplarily, please continue to refer to FIG. 1 and FIG. 2 in conjunction with FIG. 7, an air inlet port 141 and an air output port 142 are provided on the wall of the container 10. And the fan 80 can suck the air outside of the container 10 from the air inlet port 141 into the container 10 to make the air be dehumidified by the second heat exchanger 32. The dehumidified air can be continuously blown by the fan 80 to be discharged from the air output port 142, thereby realizing dehumidification of the surrounding air. And the fan 80 accelerates the flow of the airflow which can also enhance the effect of dehumidification to a certain extent.

In order to improve the air output efficiency, the air inlet port 141 is arranged opposite to the air outlet port 142. The second heat exchanger 32 and the fan 80 are arranged between the air inlet port 141 and the air output port 142. The second heat exchanger 32 is arranged on a side of the fan 80 facing the air inlet port 141. The fan 80 is disposed on a side of the second heat exchanger 32 facing the air output port 142. It can also be understood that the second heat exchanger 32 is disposed close to the air inlet port 141. The fan 80 is disposed close to the air output port 142. This structure allows the air to enter and exit directly, and efficiency of the air flowing in and out becomes higher.

Please continue to refer to FIG. 7, in order to better fix the fan 80, the fan 80 can be installed on the base portion 13 of the container 10 by a fan fixing frame 81.

Exemplarily, the fan 80 can be a variable frequency fan, so that the efficiency of the fan 80 can be adjusted as required, so as to achieve the purpose of saving energy and electricity.

In order to prevent dust from entering the container 10 effectively, filter plates may be provided at the air inlet port 141 and the air output port 142 of the container 10. For example, grid filters can be used.

In order to ensure that the dehumidification and heat exchange of the swimming pool water do not affect each other, the swimming pool temperature adjustment device 100 in the embodiment of the present application is provided with a space that allows the first heat exchanger 31 and the fan 80 to be relatively independent. Exemplarily, please continue to refer to FIG. 7, the swimming pool temperature adjustment device 100 may further include a separator 15. The separator 15 is arranged in the container 10 and separates the fan 80 from the first heat exchanger 31. The separator 15 and the container 10 form a first room 151 capable of accommodating the fan 80 and a second room 152 capable of accommodating the first heat exchanger 31, so that the environment temperature of the first room 151 after the air in the first room exchanging heat with the second heat exchanger 32 will not affect the first heat exchanger 31 in the second room 152, which improves the relative independence of dehumidification and heat exchange of the swimming pool water. And this arrangement structure can also make the overall structure of the swimming pool temperature adjustment equipment 100 more compact, reducing the occupied space and making installation and use more convenient.

The swimming pool water can be adjusted to a temperature suitable for the human body by the swimming pool temperature adjustment device 100 in the embodiment of the present application. However, impurities, such as hair, may exist continuously during the use of the swimming pool water. Based on this, please refer to FIG. 7, the swimming pool temperature adjustment equipment 100 in the embodiment of the present application is further provided with a filter device 90. The filter device 90 is communicated with the water circuit system 20. And the filter device 90 is used for filtering impurities in the water circuit system 20. When the water flow in the water circuit system 20 flows through the filter device 90, it can be filtered by the filter device 90, thereby obtaining relatively pure water.

As shown in FIG. 5, the position of the filter device 90 can be set such that the filter device 90 is closer to the water inlet end 21 of the water circuit system 20 than the first heat exchanger 31 in the water circuit system 20. That is, the swimming pool water first passes through the filter device 90, is filtered by the filter device 90, and then circulated to the first heat exchanger 31 for heat exchanging. This arrangement can effectively prevent downstream components of the water circuit system 20 from being blocked by impurities, such as the first heat exchanger 31, thereby affecting the service life of the first heat exchanger 31.

Exemplarily, as shown in FIG. 4, the filter device 90 includes a filter shell 91 and a filter element. The filter element is arranged in the filter shell 91, and the water circuit system 20 is communicated with the filter shell 91, so that the swimming pool water can be filtered by the filter element in the filter shell 91.

As shown in FIG. 4, the filter device 90 can be installed in the container 10 by the second mounting bracket 60. For example, the second mounting bracket 60 is fixedly installed on the base portion 13 of the container 10, and the filter shell 91 of the filter device 90 is fixedly installed on the second mount bracket 60.

The filter element will be gradually polluted by impurities during use. In order to improve the practicability of the filter device 90, the filter shell 91 and the filter element are made into a detachable structure in the embodiment of the present application. That is, the filter element is detachably installed in the filter shell 91. When the filter element is polluted by impurities, it is only necessary to remove the filter element from the filter shell 91 and replace it, and the entire filter device 90 does not need to be replaced, which is convenient, quick and cost saving. For example, the filter element can be detachably communicated to the filter shell 91 by means of bolt connection, snap connection, or screw connection.

In order to facilitate the removal of the filter element, as shown in FIG. 2, a yield hole is provided on the wall of the container 10, so that a part of the filter element, such as a filter element cover 92, is located outside of the container 10 to facilitate removal of the filter element. It can be understood that the filter element includes a filter element body and a filter element cover 92. The filter element body is communicated to the filter element cover 92 and the filter element body is located in the filter shell 91.

In some embodiments, as shown in FIG. 4 and FIG. 5, the water circuit system 20 includes a water pump 23. The water pump 23 is communicated with the first heat exchanger 31 by a pipeline, so as to realize the flow of water. It can be understood that the water pump 23 provides the power of water flow. Exemplarily, the water pump 23 can be a water pump 23 with a gear adjustment function, so that a suitable gear can be selected according to the size of the swimming pool, which is more practical. The water pump 23 may be communicated with the sewage pipe 70, so that the sewage can be discharged from the sewage pipe 70 when the sewage is accumulated in the water pump 23.

When the filter device 90 is provided, the water pump 23 can be arranged between the filter device 90 and the first heat exchanger 31. It can be understood that the water pump 23 and the filter device 90 are communicated by a pipeline, and the water pump 23 and the first heat exchanger 31 are communicated by a pipeline.

As shown in FIG. 4, the water pump 23 can be installed on the second mounting bracket 60, that is, the filter device 90 and the water pump 23 can be installed on a same second mounting frame 60, which can make full use of the space in the container 10, so that the swimming pool temperature adjustment equipment 100 is more compact. Further, the filter device 90 can be arranged above the water pump 23, that is, the filter device 90 and the water pump 23 are arranged in an up- and-down direction in the space, which further utilizes the space in the container 10.

The swimming pool temperature adjustment equipment 100 provided in the embodiment of the present application disinfects the water by the disinfection device 40. Exemplarily, please continue to refer to FIG. 4 and FIG. 5, the disinfection device 40 includes a salt-chlorine generator 41. The salt-chlorine generator 41 is communicated with the water circuit system 20. Chlorine gas generated by the salt-chlorine generator 41 disinfects the water of the water circuit system 20. It can be understood that the salt-chlorine generator 41 includes a cylindrical body and a positive electrode sheet and a negative electrode sheet arranged in the cylindrical body. The positive electrode sheet and the negative electrode sheet are spaced apart. And the positive electrode sheet and the negative electrode sheet are used to electrolyze the water containing chlorine in the cylindrical body to generate the chlorine gas which is used to disinfect the water. It is understandable that when the water in the cylinder body contains a certain amount of residual chlorine, the water can undergo electrolysis when it flows through the positive electrode sheet and the negative electrode sheet after electrification. The chlorine gas generated in a gap between the positive electrode sheet and the negative electrode sheet is used to disinfect the water.

Exemplarily, the disinfection device 40 may be disposed close to the water output end 22 of the water circuit system 20. That is, the disinfection device 40 is communicated with the water-output end of the housing case 3112 of the first heat exchanger 31. The water flow in the water circuit system 20 passes through the first heat exchanger 31 and then is disinfected by the disinfection device 40.

In order to detect the chlorine content of the water flow in the water circuit system 20, the swimming pool temperature adjustment device 100 provided in the embodiment of the present application is provided with a residual chlorine sensor in the salt-chlorine generator 41. And residual chlorine sensor is used to detect the chlorine concentration in the water in water circuit system 20. It can be understood that the residual chlorine sensor is communicated to a controller, and the controller can be configured to have an alarm prompt function. When the residual chlorine sensor detects that the chlorine concentration in the water is lower than a default value, the controller can automatically alarm and prompt.

In some embodiments, a salting tank is provided on the salt-chlorine generator 41. A connecting channel forms between the salting tank and the cylindrical body of the salt-chlorine generator 41 which is used for connecting the salting tank and the cylindrical body of the salt-chlorine generator 41. The connecting channel is provided with a valve, and the valve is used to open or close the connecting channel. The salting tank contains chlorine-containing salt or chlorine-containing solution. It is understandable that the chlorine-containing salt which is mixed with water to form the solution or chlorine-containing solution needs to be electrolyzed and produce chlorine gas, such as sodium chloride or sodium chloride solution. When the residual chlorine sensor detects that the chlorine concentration in the water is lower than the default value, the valve can be opened to make the chlorine-containing salt or chlorine-containing solution flow into the cylindrical body of the salt-chlorine generator 41. The valve can then be closed until the controller no longer alarms. It can be understood that the valve can be configured to be opened manually or automatically, which is not limited in this embodiment of the present application.

It can be understood that the swimming pool temperature adjustment device 100 provided in the embodiment of the present application needs to be driven by electricity. In order to improve the safety of use of the swimming pool temperature adjustment device 100, the swimming pool temperature adjustment equipment 100 is provided with a power plug with leakage protection to prevent the leakage of the swimming pool temperature adjustment equipment 100 from causing harm. It is understandable that the power plug can be communicated to an external power source so as to supply power to the components in the swimming pool temperature adjustment device 100 requiring electricity.

In the above-mentioned embodiments, the description of each embodiment has its own emphasis. For parts that are not described in detail in a certain embodiment, reference may be made to the relevant descriptions of other embodiments.

In the description of this application, the terms "first" and "second" are only used for description purposes, and cannot be understood as indicating or implying relative importance or implying the number of indicated technical features. Thus, features defined as "first", "second" may expressly or implicitly include one or more features.

The swimming pool temperature adjustment equipment provided by the embodiments of the present application is described in detail above. In above text, the principles and embodiment mode of the present application are expounded with specific examples, and above specific examples are only for helping to understand this disclosure. Moreover, for those of ordinary skill in the art, there will be changes in the specific embodiment and disclosure scope according to the ideas of this disclosure. In summary, the content of this specification should not be understood as a limitation to this disclosure.

## Claims

1. A swimming pool temperature adjustment equipment, wherein comprising:
a container with a water inlet port and a water output port;
a water circuit system being arranged in the container and having a water inlet end and a water output end, the water inlet end being communicated with the water inlet port, and the water output end being communicated with the water output port;
a dehumidifying and temperature adjustment device being arranged in the container, water flow in the water circuit system flowing through the dehumidifying and temperature adjustment device, the dehumidifying and temperature adjustment device being used to adjust a temperature of the water flow in the water circuit system, and the dehumidifying and temperature adjustment device being also used to dehumidify air; and
a disinfection device being communicated with the water circuit system, and the disinfection device being used to disinfect the water flow of the water circuit system.

2. The swimming pool temperature adjustment equipment as claimed in claim 1, wherein the dehumidifying and temperature adjustment device comprises a first heat exchanger, a second heat exchanger, a throttling component, a refrigerant and a compressor; the compressor, the first heat exchanger, the throttling component, and the second heat exchanger are communicated in sequence; the second heat exchanger is further communicated to the compressor so that the compressor, the first heat exchanger, the throttling component, and the second heat exchanger form a refrigerant circulation loop, the refrigerant can circulate and flow in the refrigerant circulation loop; the water flow in the water circuit system flows through the first heat exchanger, and the first heat exchanger is used for exchanging heat for the water flow in the water circuit system, and the second heat exchanger is used for exchanging heat for the air to dehumidify the air.

3. The swimming pool temperature adjustment equipment as claimed in claim 2, wherein the first heat exchanger comprises a housing case and a first refrigerant pipe being arranged in the housing case; one end of the first refrigerant pipe is communicated with the compressor, another end of the first refrigerant pipe is communicated with the throttling component, and the water circuit system is communicated with the housing case so that the water flow can exchange heat with the first refrigerant pipe in the housing case.

4. The swimming pool temperature adjustment equipment as claimed in claim 2, wherein the second heat exchanger comprises a second refrigerant pipe; one end of the second refrigerant pipe is communicated with the throttling component, and another end of the second refrigerant pipe is communicated with the compressor.

5. The swimming pool temperature adjustment equipment as claimed in claim 4, wherein the second heat exchanger comprises a thermal transfer sheet being arranged on the second refrigerant pipe, the thermal transfer sheet and the second refrigerant pipe are used to exchange heat for the air to dehumidify the air.

6. The swimming pool temperature adjustment equipment as claimed in any one of claims 2-5, wherein the dehumidifying and temperature adjustment device further comprises a four-way valve having a first port, a second port, a third port, and a forth port; a first end of the compressor is communicated with the first port, a second end of the compressor is communicated with the second port, a first end of the first heat exchanger is communicated with the third port, a second end of the first heat exchanger is communicated with a first end of the throttling component, a second end of the throttling component is communicated with a first end of the second heat exchanger, and a second end of the second heat exchanger is communicated with the forth port.

7. The swimming pool temperature adjustment equipment as claimed in claim 6, wherein the refrigerant can flow from the first end of the compressor to the first port, the third port, the first heat exchanger, the throttling component, the second heat exchanger, and the fourth port, the second port, and the second end of the compressor in sequence.

8. The swimming pool temperature adjustment equipment as claimed in claim 6, wherein the refrigerant can flow from the first end of the compressor to the first port, the fourth port, the second heat exchanger, the throttling component, the first heat exchanger, the third port, the second port, and the second end of the compressor in sequence.

9. The swimming pool temperature adjustment equipment as claimed in claim 2, wherein the swimming pool temperature adjustment equipment further comprises a fan, the fan is arranged in the container and is located on one side of the second heat exchanger, and the fan can blow the air dehumidified by the second heat exchanger to an outside of the container.

10. The swimming pool temperature adjustment equipment as claimed in claim 9, wherein the container comprises an air inlet port and an air output port, the air inlet port is opposite to the air output port, and the second heat exchanger and the fan are arranged between the air inlet port and the air outlet port.

11. The swimming pool temperature adjustment equipment as claimed in claim 10, wherein the second heat exchanger is disposed on one side of the fan facing the air inlet port, and the fan is disposed on one side of the second heat exchanger facing the air output port.

12. The swimming pool temperature adjustment equipment as claimed in claim 9, wherein the swimming pool temperature adjustment equipment further comprises a separator being arranged in the container; the separator separates the fan from the first heat exchanger, and the separator and the container form a first room accommodating the fan and a second room accommodating the first heat exchanger.

13. The swimming pool temperature adjustment equipment as claimed in claim 1, wherein the disinfection device comprises a salt-chlorine generator being communicated with the water circuit system, and the salt-chlorine generator is used to disinfect the water flow in the water circuit system.

14. The swimming pool temperature adjustment equipment as claimed in claim 13, wherein a residual chlorine sensor is arranged in the salt-chlorine generator, and the residual chlorine sensor is used to detect chlorine concentration of the water flow in the water circuit system.

15. The swimming pool temperature adjustment equipment as claimed in claim 1, wherein the container comprises a base portion and a cover being arranged in the base portion, the swimming pool temperature adjustment equipment further comprises a first mounting bracket being arranged in the cover, the first mounting bracket is disposed on a wall of the cover, and the disinfection device is arranged on the first mounting bracket.

16. The swimming pool temperature adjustment equipment as claimed in claim 1, wherein the swimming pool temperature adjustment equipment further comprises a filter device being communicated with the water circuit system, and the filter device is used for filtering impurities in the water circuit system.

17. The swimming pool temperature adjustment equipment as claimed in claim 16, wherein the filter device comprises a filter shell and a filter element, the filter element is detachably arranged in the filter shell, and the water circuit system is communicated with the filter shell.

18. The swimming pool temperature adjustment equipment as claimed in claim 16, wherein the water circuit system comprises a water pump, and the water pump is communicated with the filter device through a pipeline.

19. The swimming pool temperature adjustment equipment as claimed in claim 18, wherein the swimming pool temperature adjustment equipment further comprises a second mounting bracket being arranged in the container, and the filter device and the water pump are both arranged on the second mounting bracket.

20. The swimming pool temperature adjustment equipment as claimed in claim 1, wherein the container comprises a handle.
